# EUROPEAN PATENT SPECIFICATION

(11) **EP 1 785 658 B1**
(45) Date of publication and mention of the grant of the patent: **03.04.2013**
(21) Application number: 06076935.3
(22) Date of filing: 25.10.2006
(51) Int. Cl.: F16L 41/03

(54) **Connecting piece**
Verbindungsstück
Elément de connexion

(30) Priority: 10.11.2005 NL 1030392
(43) Date of publication of application: 16.05.2007
(73) Proprietor: Industrie en Handelmaatschappij Bergschenhoek B.V, 2661 AC Bergschenhoek (NL)
(72) Inventor: Brouwer, Martin, 2988 BJ Ridderkerk (NL)
(74) Representative: Dorna, Peter

(56) References cited:
- DE-U1- 8 513 889
- DE-U1- 8 601 134
- US-A1- 2005 211 802

## Description

The invention relates to a connecting piece for connecting three pipes to one main pipe.

At present, increasingly higher standards are imposed with regard to the ventilation of spaces in buildings.

The problem that arises in this connection is the coupling of several, generally horizontally extending pipes connected to one or more spaces in a building to a generally vertically extending main pipe, via which air can be exhausted from the building. Such a connection is disclosed in DE-U-8 513 889.

The object of the invention is to provide a simple and inexpensive connecting piece for use in this regard.

According to the invention, this object can be accomplished by means of a connecting piece for connecting three pipes to one main pipe, wherein the connecting piece, which is in particular intended for being embedded in concrete or the like, is formed by a housing that defines an internal space, which housing is provided at one end thereof with three side-by-side openings for connecting the three pipes thereto, whilst the housing is provided with a connecting stub for the main pipe near an opposite end thereof, whilst the central axis of the connecting stub extends at least substantially perpendicularly to a plane extending through the central axes of the openings, between opposing boundary walls of the internal space, whose width gradually decreases in a direction away from the end provided with the three openings.

In this way a connecting piece is obtained in which the boundary walls of the internal space gradually guide the air that passes into the connecting piece via the three pipes in the direction of the connecting stub.

To prevent the air flows that pass into the internal space via the three pipes from undesirably influencing each other, passages of substantially circular cross-section, which connect to the three openings formed in the end of the housing, are separated from each other by two boundary walls extending at least substantially parallel to the central axes of the openings, which bound the passages.

Preferably, the passages are at least partially bounded by wall parts of the housing that surround the passages substantially concentrically. When this construction is used, the outer walls of the housing will have a corrugated shape. This is very efficient, since such connecting pieces are frequently embedded in concrete, so that the shape of the outer walls of the housing makes it possible to anchor the connecting piece in the concrete mass in an effective manner.

Furthermore, the amount of material that is required for the connecting piece, which is preferably made of plastic material, is comparatively small. Thus, the connecting piece will also be light in weight and easy to handle.

The invention will be explained in more detail hereinafter on the basis of an embodiment of a connecting piece according to the invention as illustrated in the accompanying figures.

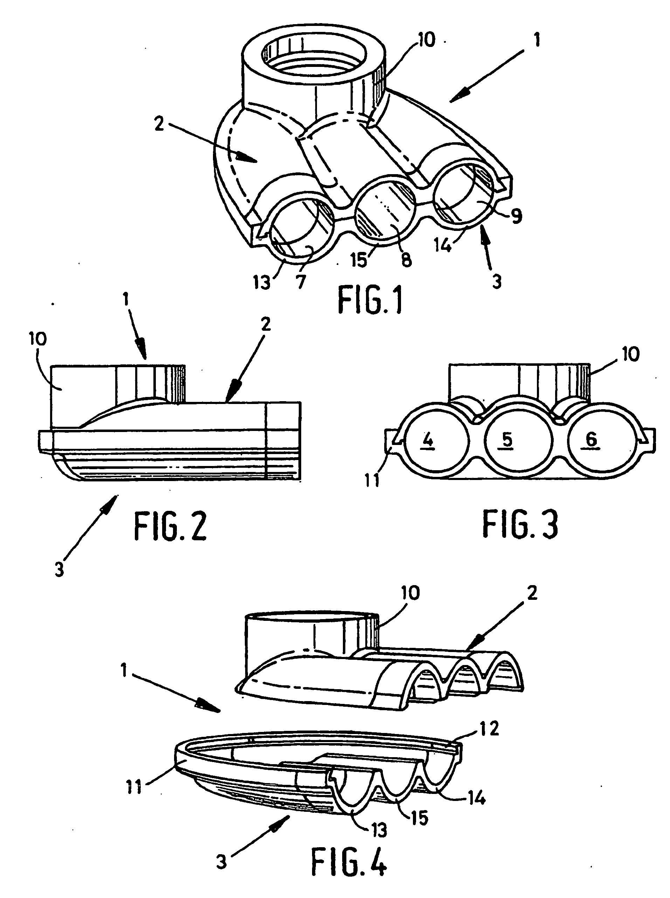

Figure 1 is a perspective view of an embodiment of the connecting piece according to the invention.
Figure 2 is a side view of the connecting piece that is shown in figure 1.
Figure 3 is a side view of figure 2.
Figure 4 is a perspective view of the spaced-apart pair of shell-shaped parts of which the housing is built up.
Figure 5 is a plan view of the part of the housing that is provided with a connecting stub.
Figure 6 is a view of the housing part that is shown in figure 5, seen in the direction indicated by the arrow VI.
Figure 7 is a view of the inner side of the housing part that is shown in figure 5, seen in the direction indicated by the arrow VII in figure 6.
Figure 8 is a perspective view of the housing part of figure 5.
Figure 9 is a cross-sectional view of figure 6, seen along the line IX-IX in figure 6.
Figure 10 is a perspective view of the inner side of the housing part that is shown in figure 5.
Figure 11 is a view of the second housing part.
Figure 12 is a view of figure 11, seen in the direction indicated by the arrow XII in figure 11.
Figure 13 is a view of the housing part that is shown in figure 11, seen in the direction indicated by the arrow XIII in figure 11.
Figure 14 is a perspective view of the inner side of the second housing part.
Figure 15 is a perspective view of the outer side of the further housing part.

The connecting piece according to the invention is made up of a housing 1, preferably made of plastic material, which comprises an upper housing part 2 and a lower housing part 3.

At one end, the housing 1 is provided with three side-by-side openings 4-6, to which passages 7-9 of substantially circular cross-section bounded by wall parts of the housing connect.

As will be apparent from the figures, the central axes of the openings 4-6 and of the passages 7-9 forming an internal space in the housing lie in one plane.

A connecting stub 10 formed in one piece with the upper housing part 2, which is located near the end of the housing 1 remote from the openings 4-6, is so disposed that the central axis of said connecting stub 10 extends perpendicularly to the plane through the central axes of the passages 7-9.

As will furthermore be apparent from the figures, the width of the housing gradually decreases from the end of the housing provided with the openings 4-6 in the direction of the connecting stub 10, seen externally in a plane through the central axes of the passages 7-9, in such a manner that the outer circumference of the housing is more or less U-shaped, seen in a direction parallel to the central axis of the connecting stub 10.

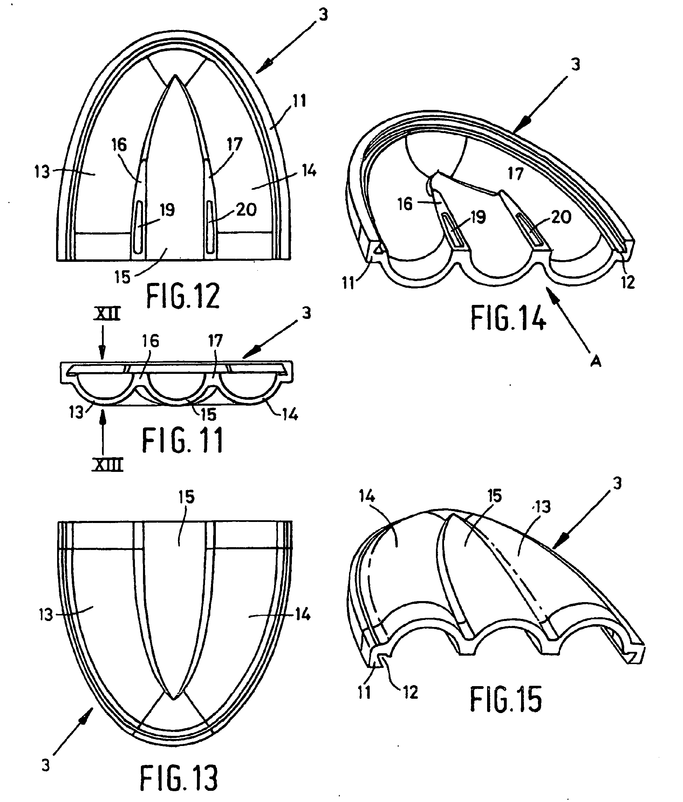

The outer circumference of the lower housing part 3 (figures 11-15) is bounded by a collar 11, in the inner wall of which a triangular (seen in sectional view) undercut 12 has been formed. Curved wall parts 13 and 14 that surround the central axes of the passages 7 and 9 substantially concentrically extend from the collar 11, with the facing ends of said wall parts joining a wall portion 15 that concentrically surrounds the central axis of the passage 8. The connections between the wall parts 13 and 14 and the wall part 15 form ridges 16 and 17 resp. wherein there has been provided recesses 19 and 20 resp. extending in the longitudinal direction of said ridges.

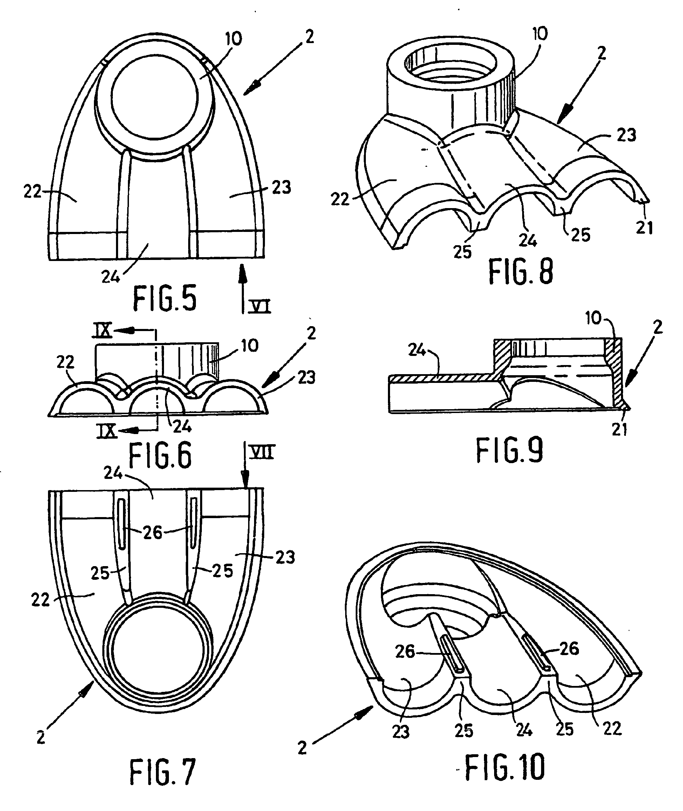

The upper wall part 2 (figures 5-10) is bounded by a projecting nose 21, whose shape has been adapted to correspond to that of the undercut 12 formed in the collar 11.

Said upper wall part 2 furthermore comprises wall parts 22-24 of arcuate section, which substantially correspond to the wall parts 13-15, wherein the connection between the middle wall part 24 bounding the passage 8 connects to the wall parts 22 and 23 that bound the passages 7 and 9, respectively, via ridges 25. Projecting cams 26 are formed on the ridges 25, which cams correspond in size and shape to the recesses 19 and 20 formed in the ridges 16 and 17.

The two shell-shaped parts 2 and 3 can be interconnected in a simple manner by sliding the upper shell part 2 onto the lower shell part 3 in the direction indicated by the arrow A in figure 14, in such a manner that the projecting nose 21 is inserted into the undercut 12. As a result of the inherent resilience of the material, preferably plastic, of which the two shell-shaped parts 2 and 3 are made, the material of the two shell parts can compress to a small extent, in such a manner that the projecting cams 26 of the ridges 25 can be slid over the ridges 16 and 17 until they snap into the recesses 19 and 20 so as to effect a solid connection between the two shell-shaped parts 2 and 3.

A pipe can be connected to each of the openings 4-8 by inserting the ends of such pipes into the passages 7-9. Furthermore, a main pipe can be connected to the connecting stub 10. Air supplied to the connecting piece 1 via the pipes 4-6 connected to the openings can be exhausted through the main pipe.

As a result of the configuration of the internal passages 7-8, which are separated from each other by the ridges 16, 17, 25 forming boundary walls, and as a result of the internal configuration of the internal space of the housing 1 defined by the passages 7-9, a steady flow of air in the direction of the connecting stub can be effected, since the internal width of the internal space is more or less U-shaped, similar to the external width of the housing. Accordingly, the boundary walls formed by the ridges 16, 17, 25 are slightly curved. In this way an effective ventilation action can be realised, without heavy duty fans or the like being required for displacing the air.

Usually, at least the three pipes that connect to the openings 4-6 and the manifold are embedded in a concrete floor plate or the like in buildings. As a result of the above-described contours of the upper side of the housing 1, the housing 1 is firmly anchored in the concrete mass. Furthermore, the two shell-shaped housing parts 2 and 3 can each be formed in a two-piece mould in a simple manner.

## Claims

1. A connecting piece for connecting three pipes to one main pipe, wherein the connecting piece, which is in particular intended for being embedded in concrete or the like, is formed by a housing (1) that defines an internal space, which housing is provided at one end thereof with three side-by-side openings (4, 5, 6) for connecting the three pipes thereto, whilst the housing is provided with a connecting stub (10) for the main pipe near an opposite end thereof, whilst the central axis of the connecting stub extends substantially perpendicularly to a plane extending through the central axes of the openings, between opposing boundary walls of the internal space, whose width gradually decreases in a direction away from the end provided with the three openings **characterized in that** the housing is made up of two housing parts (2, 3), which are separated from each other along a plane which at least substantially coincides with the plane through the central axes of the openings in one end of the housing and through the central axes of the passages connecting to the openings.

2. A connecting piece according to claim 1, **characterised in that** passages (7, 8, 9) of substantially circular cross-section, which connect to the three openings formed in the end of the housing, are separated from each other by two boundary walls (16, 17) extending at least substantially parallel to the central axes of the openings, which bound the passages.

3. A connecting piece according to claim 2, **characterised in that** the ends of the wall parts bounding the ends of the passages remote from the end of the housing that is provided with the openings are located near the circumference of the passage that is bounded by the connecting stub.

4. A connecting piece according to claim 2 or 3, **characterised in that** the wall parts bounding the passages are curved in a direction towards each other.

5. A connecting piece according to any one of the preceding claims 2-4, **characterised in that** the passages are at least partially bounded by wall parts of the housing that surround the central axes of the passages substantially concentrically.

6. A connecting piece according to claim 1, **characterised in that** one housing part is provided with a collar (11) forming a boundary edge of said housing part, in which collar an undercut (12) has been formed, and **in that** the other housing part is provided with a nose (21) forming a boundary edge of said other housing part, which nose first in said undercut.

7. A connecting piece according to one or more of claims 1 to 6, **characterised in that** wall parts of the one housing part, which bound a passage, are provided with recesses (19, 20) and **in that** wall parts of the other housing part, which bound a passage, are provided with projecting cams (26) that fit in said recesses.

## Patentansprüche

1. Verbindungsstück zum Verbinden von drei Rohren mit einem Hauptrohr, wobei das Verbindungsstück, das insbesondere dafür vorgesehen ist, in Beton oder ähnlichem eingebettet zu werden, von einem Gehäuse (1) gebildet ist, das einen Innenraum definiert und das an einem seiner Enden mit drei nebeneinanderliegenden Öffnungen (4, 5, 6) versehen ist, um die drei Rohre daran anzuschließen, während das Gehäuse nahe seinem entgegengesetzten Ende mit einem Verbindungsstutzen (10) für das Hauptrohr versehen ist, während die Mittelachse des Verbindungsstutzens sich im Wesentlichen senkrecht zu einer Ebene erstreckt, die sich durch die Mittelachsen der Öffnungen zwischen gegenüberliegenden Begrenzungswänden des Innenraums erstreckt, dessen Breite sich allmählich in Richtung von dem mit den drei Öffnungen versehenen Ende weg verringert, **dadurch gekennzeichnet, dass** das Gehäuse aus zwei Gehäuseteilen (2, 3) besteht, die entlang einer Ebene voneinander getrennt sind, die wenigstens im Wesentlichen mit der Ebene durch die Mittelachsen der Öffnungen in einem Ende des Gehäuses und durch die Mittelachsen der an die Öffnungen angeschlossenen Durchlässe zusammenfällt.

2. Verbindungsstück nach Anspruch 1, **dadurch gekennzeichnet, dass** Durchlässe (7, 8, 9) von im Wesentlichen kreisförmigem Querschnitt, die an die drei in dem Ende des Gehäuses gebildeten Öffnungen angeschlossen sind, voneinander durch zwei Begrenzungswände (16, 17) getrennt sind, die sich wenigstens im Wesentlichen parallel zu den Mittelachsen der Öffnungen erstrecken und die Durchlässe begrenzen.

3. Verbindungsstück nach Anspruch 2, **dadurch gekennzeichnet, dass** die Enden der Wandteile, die die vom Ende des Gehäuses, das mit den Öffnungen versehen ist, entfernten Enden der Durchlässe begrenzen, nahe dem Umfang des Durchlasses angeordnet sind, der von dem Verbindungsstutzen begrenzt ist.

4. Verbindungsstück nach Anspruch 2 oder 3, **dadurch gekennzeichnet, dass** die Wandteile, die die Durchlässe begrenzen, zueinander hin gekrümmt sind.

5. Verbindungsstück nach einem der vorhergehenden Ansprüche 2 bis 4, **dadurch gekennzeichnet, dass** die Durchlässe wenigstens teilweise von Wandteilen des Gehäuses begrenzt sind, die die Mittelachsen der Durchlässe im Wesentlichen konzentrisch umgeben.

6. Verbindungsstück nach Anspruch 1, **dadurch gekennzeichnet, dass** ein Gehäuseteil mit einem Kragen (11) versehen ist, der einen Begrenzungsrand des Gehäuseteils bildet und in dem ein Hinterschnitt (12) gebildet wurde, und dass das andere Gehäuseteil mit einem Ansatz (21) versehen ist, der einen Begrenzungsrand des anderen Gehäuseteils bildet und der in den Hinterschnitt passt.

7. Verbindungsstück nach Anspruch 1 oder 6, **dadurch gekennzeichnet, dass** Wandteile des einen Gehäuseteils, die einen Durchlass begrenzen, mit Ausnehmungen (19, 20) versehen sind und dass Wandteile des anderen Gehäuseteils, die einen Durchlass begrenzen, mit vorstehenden Nocken (26) versehen sind, die in die Ausnehmungen passen.

## Revendications

1. Pièce de raccordement pour raccorder trois tuyaux à un tuyau principal, dans laquelle la pièce de raccordement, qui est en particulier prévue pour être enfouie dans du béton ou similaire, est formée par un logement (1) qui définit un espace interne, lequel logement est doté à une extrémité de celui-ci de trois ouvertures côte à côte (4, 5, 6) pour y raccorder les trois tuyaux, alors que le logement est doté d'une embase de raccordement (10) pour le tuyau principal à proximité d'une extrémité opposée de celui-ci, alors que l'axe central de l'embase de raccordement s'étend sensiblement perpendiculairement à un plan s'étendant à travers les axes centraux des ouvertures, entre des parois de délimitation opposées de l'espace interne, dont la largeur diminue progressivement dans une direction en éloignement de l'extrémité dotée des trois ouvertures, **caractérisée en ce que** le logement est constitué de deux parties de logement (2, 3), qui sont séparées l'une de l'autre le long d'un plan qui coïncide au moins sensiblement avec le plan à travers les axes centraux des ouvertures dans une extrémité du logement et à travers les axes centraux des passages raccordant les ouvertures.

2. Pièce de raccordement selon la revendication 1, **caractérisée en ce que** des passages (7, 8, 9) de coupe sensiblement circulaire, qui se raccordent aux trois ouvertures formées dans l'extrémité du logement, sont séparés les uns des autres par deux parois de délimitation (16, 17) s'étendant au moins sensiblement parallèlement aux axes centraux des ouvertures, qui délimitent les passages.

3. Pièce de raccordement selon la revendication 2, **caractérisée en ce que** les extrémités des parties de paroi délimitant les extrémités des passages à distance de l'extrémité du logement qui est doté des ouvertures sont situées à proximité de la circonférence du passage qui est délimité par l'embase de raccordement.

4. Pièce de raccordement selon la revendication 2 ou 3, **caractérisée en ce que** les parties de paroi délimitant les passages sont courbées dans une direction les unes vers les autres.

5. Pièce de raccordement selon l'une quelconque des revendications précédentes 2 à 4, **caractérisée en ce que** les passages sont au moins partiellement délimités par des parties de paroi du logement qui entourent les axes centraux des passages sensiblement concentriquement.

6. Pièce de raccordement selon la revendication 1, **caractérisée en ce qu'**une partie de logement est dotée d'un collier (11) formant un bord de délimitation de ladite partie de logement, une contre-dépouille (12) ayant été formée dans ce collier, et **en ce que** l'autre partie de logement est dotée d'un bec (21) formant un bord de délimitation de ladite autre partie de logement, lequel bec s'emboîte dans ladite contre-dépouille.

7. Pièce de raccordement selon la revendication 1 ou 6, **caractérisée en ce que** les parties de paroi de la première partie de logement, qui délimitent un passage, sont dotées d'évidements (19, 20) et **en ce que** les parties de paroi de l'autre partie de logement, qui délimitent un passage, sont dotées de cames en saillie (26) qui s'emboîtent dans lesdits évidements.
